# EUROPÄISCHE PATENTSCHRIFT

(11) **EP 2 032 401 B1**
(45) Veröffentlichungstag und Bekanntmachung des Hinweises auf die Patenterteilung: **05.03.2014**
(21) Anmeldenummer: 07728287.9
(22) Anmeldetag: 19.04.2007
(51) Int. Cl.: B60S 1/04

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF ESSUIE-GLACE, NOTAMMENT POUR UN VEHICULE AUTOMOBILE

(30) Priorität: 13.06.2006 DE 102006027603
(43) Veröffentlichungstag der Anmeldung: 11.03.2009
(73) Patentinhaber: Robert Bosch GmbH, 70442 Stuttgart (DE)
(72) Erfinder: BOOS, Tino, 76532 Baden-Baden (DE); BENNER, Andreas, 77830 Buehlertal (DE)
(86) Internationale Anmeldenummer: PCT/EP2007/053827
(87) Internationale Veröffentlichungsnummer: WO 2007/144221

(56) Entgegenhaltungen:
- DE-A1- 10 054 321
- DE-A1- 10 253 273
- US-B1- 6 375 136

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen, beispielsweise aus der DE 197 12 112 A1, bekannt, die einen Träger aufweisen, der an einem Halter befestigt ist. Der Träger trägt die wesentlichen Komponenten der Scheibenwischvorrichtung, wie beispielsweise die Wischerlager und den Antrieb. Zur Befestigung des Antriebs ist am Träger der Halter befestigt, der den Antrieb am Träger haltert. Der Antrieb umfasst hierbei einen Elektromotor, an dessen Abtriebswelle ein Getriebe vorgesehen ist. Das Getriebe ist in einem Getriebegehäuse gelagert und weist ein Klemmelement mit einer Aufnahme auf, die den Träger aufnimmt. Zur Fixierung des Trägers in der Aufnahme des Klemmelementes ist der Halter derart angeordnet, dass der Träger in die Aufnahme gedrückt wird. Durch Befestigungsschrauben wird der Halter am Klemmelement, mithin am Getriebegehäuse, befestigt.

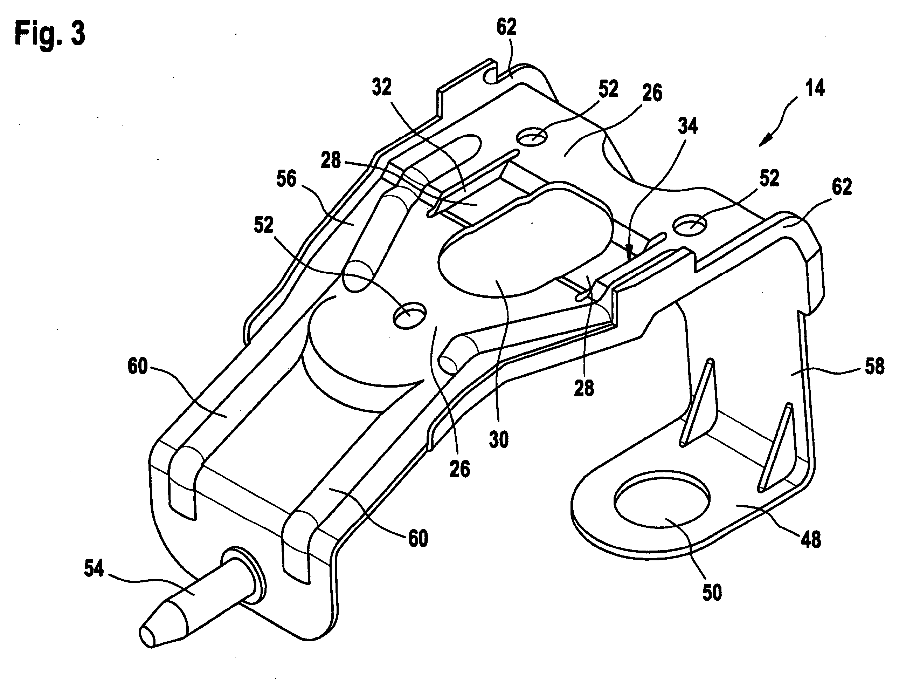

Eine Scheibenwischvorrichtung dieser Art ist aus der DE 102 53 273 A1 bekannt. Die Scheibenwischvorrichtung umfasst ein Gehäuse, in dem ein Getriebe untergebracht ist, das antriebsseitig mit einem Antrieb verbunden ist. Abtriebsseitig ist das Getriebe mit einer Abtriebswelle gekoppelt, die über den Antrieb antreibbar ist. In der Figur 3 ist gut erkennbar, dass an dem Gehäuse ein Träger gehalten ist, der durch einen Halter in einem an dem Gehäuse ausgebildeten Aufnahmeraum klemmend fixiert ist. Der Halter ist plattenförmig ausgebildet und ist in dem Bereich zwischen dem Träger und der Abtriebswelle stufenförmig gebogen. Über Befestigungsschrauben ist der Halter an drei Domen befestigt.

Um die Scheibenwischvorrichtung zusammenzusetzen, wird zunächst der Träger in den Aufnahmeraum eingelegt. Anschließend wird der Halter auf die Dome aufgesetzt und durch Befestigungsschrauben an den beiden Domen festgeschraubt. Schließlich wird der Halter an dem Dom mit einer Befestigungsschraube befestigt, wodurch der Halter verbogen wird, um den Träger klemmend zu fixieren.

### Offenbarung der Erfindung

### Vorteile der Erfindung

Die erfindungsgemäße Scheibenwischvorrichtung mit den Merkmalen des Hauptanspruchs hat den Vorteil, dass der Halter einen Haltebereich und ein flexibles Mittel umfasst und der Träger durch das flexible Mittel des Halters an diesem befestigt ist. Auf diese Weise ist eine zuverlässige und dauerhafte Befestigung des Antriebes am Träger gewährleistet. Als weiterer Vorteil ist hierbei zu sehen, dass eine Entkopplung zwischen dem Halter und dem Träger erzielt wird und ein Verbiegen des Halters, welches beispielsweise aus eine Klemmverbindung zwischen Halter und Träger resultiert, vermieden wird. Darüber hinaus kann auf diese Weise am Halter auch ein weiteres Befestigungselement vorgesehen sein, welches zur Befestigung der Scheibenwischvorrichtung am Kraftfahrzeug dienen kann.

Dadurch, dass der Haltebereich steif und einstückig mit dem flexiblen Mittel ausgebildet ist, wird eine besonders gute Befestigung erzielt.

An dem Haltebereich des Halters ist ein Klemmelement vorgesehen, und der Träger ist zwischen dem Klemmelement und dem flexiblen Mittel verklemmt.

Ein Antrieb und ein Getriebegehäuse mit einem Getriebe sind vorgesehen und das Klemmelement umfasst das Getriebegehäuse. Hierbei ist es besonders vorteilhaft, wenn das Getriebegehäuse eine Aufnahme aufweist, in die der Träger aufgenommen ist.

Durch die in den Unteransprüchen aufgeführten Maßnahmen ergeben sich vorteilhafte Weiterbildungen und Verbesserungen der im Hauptanspruch angegebenen Merkmale.

Vorteilhafterweise ist das flexible Mittel flexibel im Verhältnis zum Haltebereich, so dass eine leichte Montage gewährleistet ist.

Sicher, einfach und kostengünstig ist die Verbindung zwischen Träger und Halter als Klemmverbindung vorgesehen.

Vorteilhafterweise ist das flexible Mittel als Brücke ausgebildet, so dass eine ausreichend große Berührungsfläche zwischen Halter und Träger gegeben ist.

Eine besonders sichere Verbindung zwischen Klemmelement und Halter ist durch eine Bolzenverbindung, insbesondere Schraub- oder Nietverbindung, gegeben.

Einfach und kostengünstig weist der Halter vorteilhafterweise eine Öffnung mit einer Berandung auf, durch die Getriebekomponenten des Getriebes, insbesondere die Abtriebswelle, durchtreten und zumindest ein Schlitz im Bereich der Berandung vorgesehen ist, so dass die Brücke gebildet ist.

### Zeichnungen

Ein Ausführungsbeispiel der Erfindung ist in den Zeichnungen dargestellt und in der nachfolgenden Beschreibung näher erläutert. Es zeigen:
- Figur 1: einen Ausschnitt aus einer erfindungsgemäßen Scheibenwischvorrichtung in einer perspektivischen Darstellung,
- Figur 2: einen Ausschnitt aus einer erfindungsgemäßen Scheibenwischvorrichtung in einer Variation,
- Figur 3: einen Halter einer erfindungsgemäßen Scheibenwischvorrichtung im Detail und
- Figur 4: einen Ausschnitt aus einer weiteren erfindungsgemäßen Scheibenwischvorrichtung in einer perspektivischen Darstellung.

### Beschreibung des Ausführungsbeispiels

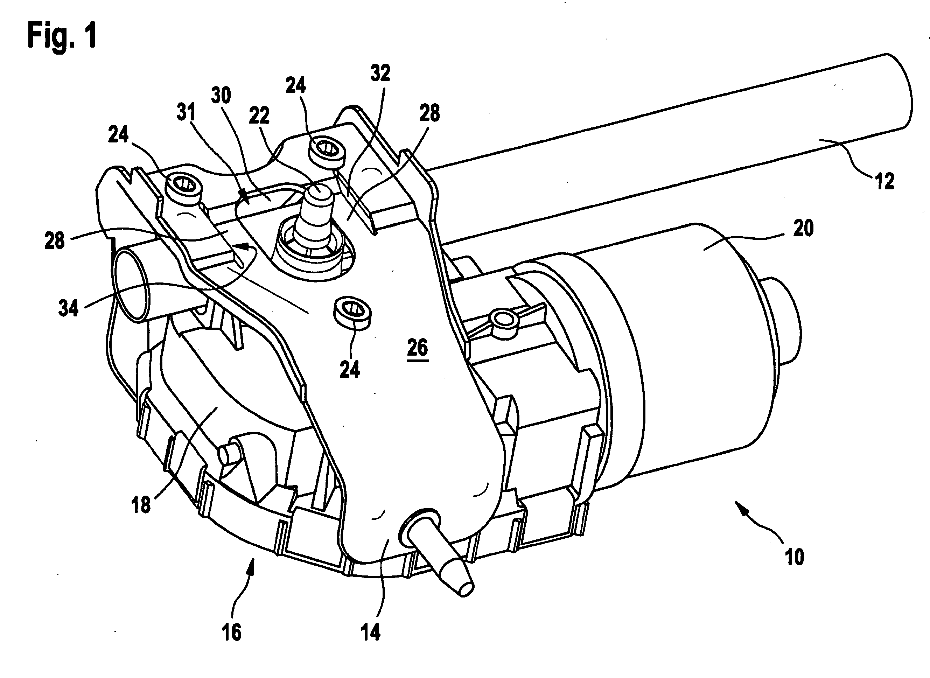

In Figur 1 ist ein Ausschnitt einer erfindungsgemäßen Scheibenwischvorrichtung 10 in perspektivischer Darstellung gezeigt. Diese umfasst im Wesentlichen einen Träger 12 sowie einen Halter 14. Durch den Halter 14 ist ein Antrieb 16 der Scheibenwischvorrichtung 10 am Träger 12 befestigt. Der Antrieb 16 weist hierbei ein Gehäuse 18 auf, welches als Getriebegehäuse ausgebildet ist und ein Getriebe beherbergt. Das Getriebe wird durch eine Antriebseinheit 20, die hier als Elektromotor ausgebildet ist, angetrieben und versetzt eine Abtriebswelle 22 in eine Dreh- oder Pendelbewegung.

Der Träger 12 ist als Rohr, insbesondere aus Metall, ausgebildet und trägt an den Enden seiner Längserstreckung jeweils ein Wischerlager, welches hier aus Gründen der Übersichtlichkeit nicht gezeichnet ist. In den Wischerlagern ist jeweils eine Wischerwelle gelagert, die über ein Gestänge, das hier ebenfalls aus Gründen der Übersichtlichkeit nicht gezeichnet ist, von der Abtriebswelle 22 in eine Pendelbewegung versetzt wird. Drehfest mit der Wischerwelle sind die Wischhebel verbunden, die an ihrem freien Ende jeweils ein Wischblatt zu tragen vermögen.

Der Halter 14 befestigt den Träger 12 am Getriebegehäuse 18. Hierbei klemmt der Halter 14 den Träger 12 am Getriebegehäuse 18 fest und ist mittels Befestigungselementen 24, die hier als Schrauben ausgebildet sind, am Getriebegehäuse 18 befestigt, so daß durch das Getriebegehäuse 18 ein Klemmelement gebildet ist. Hierzu weist der Halter 14 einen Haltebereich 26 auf, an dem die Befestigungselemente 24 den Halter 14 mit dem Getriebegehäuse 18 verbinden. Darüber hinaus weist der Halter 14 flexible Mittel 28 auf, die den Träger 12 an das Getriebegehäuse 18 andrücken. Somit steht nur das flexible Mittel 28 des Halters 14, und nicht der Haltebereich 26 des Halters 14, mit dem Träger 12 in Berührung.

Der Halter 14 ist aus Blech ausgebildet und weist im Wesentlichen ein L-förmiges Profil mit zwei Schenkeln auf. In einem der Schenkel ist eine Öffnung 30 vorgesehen, durch die die Abtriebswelle 22 aus dem Getriebegehäuse 18 hindurchtritt. Die Öffnung 30 weist hierbei eine Berandung 31 auf. Entlang der Längserstreckung des Trägers 12 weist der Halter 14 im Bereich der Öffnung 30 jeweils einen, insbesondere zur Öffnung 30 symmetrischen Schlitz 32, 34 auf, der quer zur Längserstreckung des Trägers 12 verläuft. Die Bereiche zwischen den Schlitzen 32, 34 und der Öffnung 30 sind in Richtung des Trägers 12 gebogen, zum zwar derart, dass die flexiblen Bereiche 28 durch die dadurch entstehenden Brücken gebildet sind, die den Träger 12 in Richtung des Getriebegehäuses 18 pressen.

Wird der Halter 14 somit am Getriebegehäuse 18 zusammen mit dem Träger 12 befestigt, so vermögen die flexiblen Bereiche 28, durch ihre Brücken, den Träger 12 am Getriebegehäuse 18 festzupressen, ohne dass der Haltebereich 26 des Halters 14 verzogen oder verbogen wird.

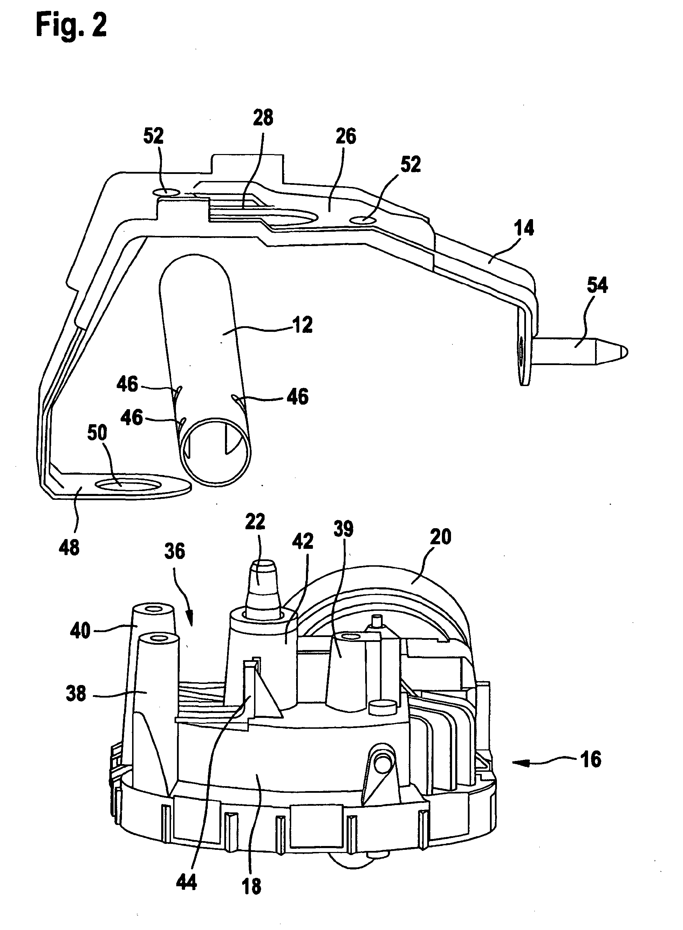

In Figur 2 ist eine Explosionsdarstellung des Ausschnitts aus Figur 1 einer erfindungsgemäßen Scheibenwischvorrichtung 10 gezeigt. Das Getriebegehäuse 18 weist eine Aufnahme 36 auf, die zur Aufnahme des Trägers 12 dient. Die Aufnahme 36 wird hierbei durch mehrere Dome 38, 40, 42 gebildet. Der erste Dom 38 sowie der zweite Dom 40 sind als zylindrische oder konische Schraubendome ausgebildet, von denen zumindest zwei in einer Höhe bündig abschließen. In diese sind die Befestigungsmittel 24 zur Befestigung des Halters 14 eingeschraubt. Durch den dritten Dom 42 ist hierbei die Abtriebswelle 22 geführt. Darüber hinaus sind am Getriebegehäuse 18 noch Aufnahmestutzen 44 vorgesehen, die den ersten und zweiten Domen 38, 40 gegenüber liegen, also entlang der Längserstreckung des Trägers 12 jeweils an etwa der gleichen Stelle angeordnet sind, so dass der Träger 12 in der Aufnahme 36 fixiert ist. Durch die Aufnahme 36 und die flexible Bereiche 28 wird dadurch eine Klemmverbindung 45 erzielt.

Neben den beiden Domen 38, 40 ist auf der dem dritten Dom 42 gegenüberliegenden Seite des Getriebegehäuses 18 noch ein vierter Dom 39 vorgesehen, so daß der erste Dom 38, der zweite Dom 40 und der vierte Dom 47 um den dritten Dom 42 herum angeordnet sind um den Halter 14 mit dem Getriebegehäuse 18 zu verbinden.

Der Träger 12 weist entlang seiner Längserstreckung drei sickenartige Vertiefungen 46 auf, die in ihrer Größe und Anordnung derart ausgebildet sind, dass die Dome 38, 40, 42 des Gehäuses 18 mit den Vertiefungen 46 zusammenwirken, wenn der Träger 12 in die Aufnahme 36 eingelegt ist. Die sickenartigen Vertiefungen 46 sind dann in axialer Richtung des Trägers 12 formschlüssig über die Dome 38, 40, 42 mit dem Getriebegehäuse 18 derart verbunden, dass der Träger 12 gegen ein axiales Verschieben gesichert ist. In einer Variation der Erfindung kann diese axiale Fixierung auch in anderer Weise vorgenommen sein. Beispielsweise kann im Boden des Gehäuses 18, im Bereich der Aufnahme 36 ein Stift ausgebildet sein, der mit einer Öffnung im Träger 12 zusammenwirkt und diesen gegen axiales Verschieben sichert. Ebenso kann am Halter 14 ein Formschlußelement, beispielsweise ein Stift oder eine Rippe vorgesehen sein, das mit einer entsprechenden Öffnung oder Vertiefung im Träger 12 zusammenwirkt.

Der Halter 14 ist von im Wesentlichen L-förmiger Gestalt und einstückig aus Blech ausgebildet. Ein Schenkel des L-förmigen Halters 14 ist dabei derart angeordnet, dass er die Aufnahme 36 abschließt, so dass der Träger 12 nicht aus der Aufnahme 36 weichen kann. Am anderen Schenkel des Halters 14 ist ein Befestigungsteil 48 angeordnet, welches als ebener Fortsatz ausgebildet ist. Dieser ist einstückig aus dem Blech des Halters 14 ausgeformt. Der Fortsatz 48 weist ein Befestigungselement 50 auf, welches durch eine Öffnung gebildet ist und zur Befestigung der Scheibenwischvorrichtung an der Karosserie des Kraftfahrzeugs dient. Zur Befestigung des Halters 14 am Getriebegehäuse 18 sind Schrauböffnungen 52 vorgesehen, in die die Befestigungsmittel 24 (Figur 1) eingesetzt werden können, die anschließend in die Dome 38, 39, 40, eingeschraubt werden. Die Schrauböffnungen 52 korrespondieren daher in ihrer Anordnung mit den Domen 38, 39, 40.

Im Bereich des Trägers 12 weist der Halter die flexiblen Mittel 28 auf, die den Träger 12 in die Aufnahme 36 hineindrücken. Da die Schrauböffnungen 52 im Haltebereich 26 des Halters 14 angeordnet sind, verbiegt sich der Halter bzw. der Haltebereich 26 des Halters 14 durch die Kraft, die der Träger 12 auf den Halter 14 ausübt, nicht. Vielmehr wird der Träger 12 durch die elastische Verformung der flexiblen Mittel 28, die hier als Brücken ausgebildet sind, in der Aufnahme 36 fixiert. Dadurch wird eine hohe Maßhaltigkeit der Scheibenwischvorrichtung erzielt, die die Montage im Kraftfahrzeug wesentlich erleichtert.

An dem dem Befestigungsteil 48 abgewandten Ende weist der Halter 14 darüber hinaus noch ein weiteres Befestigungsteil 54 auf, welches ebenso der Befestigung der Scheibenwischvorrichtung 10 an der Karosserie des Kraftfahrzeuges dient.

In Figur 3 ist der Halter 14 aus den Figuren 1 und 2 nochmals im Detail dargestellt. Der Halter 14 ist von im Wesentlichen L-förmiger Gestalt und weist den ersten Schenkel 56 und den zweiten Schenkel 58 auf. Der erste Schenkel 56 weist darüber hinaus die Öffnung 30 auf, durch welche in montiertem Zustand der Dom 42, der die Wischerwelle 22 lagert, austritt. Im Bereich der Öffnung 30 sind die zwei Schlitze 32, 34 derart angeordnet, daß zwischen der Öffnung 30 und dem jeweiligen Schlitz 32, 34 ein stegartiger Abschnitt entsteht, der nach innen, in den Bereich zwischen dem zweiten Schenkel 58 und dem ersten Schenkel 56, hineinragt. Dadurch wird die Brücke als flexibles Mittel 28 gebildet. Zur Befestigung des Halters 14 am Gehäuse 18 sind, um die Öffnung 30 herum, drei Schrauböffnungen 52 angeordnet, die Schrauben oder Nieten als Befestigungsmittel aufzunehmen vermögen, die in montiertem Zustand in die Dome 38, 39, 40 eingeschraubt werden. Die Schrauböffnungen 52 sind hierbei in einem relativ zum flexiblen Mittel 28 steifen Haltebereich 26 angeordnet. Zur Stabilisierung weist der Halter 14 darüber hinaus noch verschiedene Sicken 60 auf. Die flexiblen Mittel 28 sind hierbei derart angeordnet, dass sie in montierter Position den Träger 12 in seiner Position fixieren. Die Schlitze 32, 34 verlaufen daher senkrecht zur Längserstreckung des Trägers 12 (Figur 2) und sind bezüglich der Öffnung 30 gegenüberliegend, bzw. spiegelsymmetrisch, angeordnet. Weiterhin ist an der Berandung des Halters 14 ein Kragen 62, im Bereich zwischen dem ersten Schenkel 56 und dem zweiten Schenkel 58, angeordnet, der zu einer zusätzlichen Versteifung des Halters 14 führt.

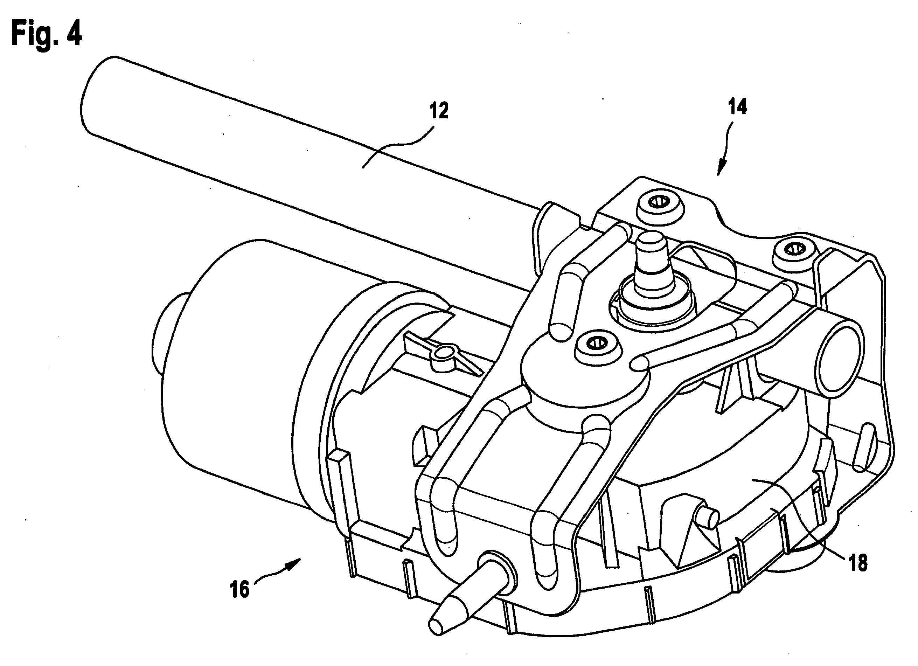

In Figur 4 ist eine Variation der erfindungsgemäßen Scheibenwischvorrichtung 10 gezeigt. Der Träger 12 ist wiederum in die Aufnahme 36 des Gehäuses 18 aufgenommen. Zur Fixierung verschließt der Halter.14 die Aufnahme 36. Der Halter 14 weist hier keine Schlitze 32, 34 auf, sondern das flexible Mittel 28 ist durch an der Innenseite des Halters im Bereich des Trägers 12 befestigte elastische, insbesondere gummielastisch Elemente, wie beispielsweise Stifte aus Hartgummi, realisiert. Diese Elemente, die hier in der Zeichnung nicht zu sehen sind, stellen die Verbindung zwischen dem Halter 14 und dem Träger 12 her, so dass sich der Halter 14 beim Klemmvorgang gegen den Träger 12 nicht verbiegt. Die Stifte können nicht nur radial, sondern auch streifenartig, axial und/oder schräg zum Träger 12 verlaufen.

In einer weiteren Variante kann ein flexibles Mittel 28 durch eine Veränderung der Materialstärke, insbesondere durch eine Verminderung der Dicke des den Halter 14 bildenden Bleches, realisiert sein. In diesem Fall stehen die Bereiche des Halters 14, die eine geringere Dicke aufweisen, in Kontakt mit dem Träger 12. Dies kann auch durch eine geeignete Formgebung erzielt werden; beispielsweise durch eine geeignete Anordnung der Sicken 60, so daß in dem Bereich des Halters 14, der mit dem Träger 12 in Kontakt steht, eine höhere Biegsamkeit des Halters 14 erzielt ist. Hier kann das flexible Mittel 28 als Sicke im Halters 14 realisiert werden, in deren Bereich die Wandstärke des Bleches des Halters 14 etwas dünner und damit flexibler ist. Auf diese Weise steht der Halter 14 wiederum nur in den flexiblen Bereichen der Sicke mit dem Träger 12 in Berührung. Umgekehrt können auch die Sicken 60 derart angeordnet sein, daß ihre stabilisierende Wirkung nur im Haltebereich 26 wirkt.

## Patentansprüche

1. Scheibenwischvorrichtung (10), insbesondere für ein Kraftfahrzeug, mit einem Antrieb (16), der ein Getriebegehäuse (18) mit einem Getriebe umfasst, mindestens einem Halter (14) und mindestens einem Träger (12), der an dem mindestens einen Halter (14) befestigt ist, wobei zwischen dem Träger (12) und dem Halter (14) eine Klemmverbindung vorgesehen ist, **dadurch gekennzeichnet, dass** der Halter (14) einen Haltebereich (26) und ein flexibles Mittel (28) umfasst, wobei der Haltebereich (26) steif und einstückig mit dem flexiblen Mittel (28) ausgebildet ist, dass der Haltebereich (26) des Halters (14) an dem Getriebegehäuse (18) befestigt ist, und dass der Träger (12) zwischen dem Getriebegehäuse (18) und dem flexiblen Mittel (28) verklemmt ist.

2. Scheibenwischvorrichtung (10) nach Anspruch 1, **dadurch gekennzeichnet, dass** das flexible Mittel (28) flexibel im Verhältnis zum Haltebereich (26) ist.

3. Scheibenwischvorrichtung (10) nach Anspruch 1 oder 2, **dadurch gekennzeichnet, dass** das flexible Mittel (28) als Brücke ausgebildet ist.

4. Scheibenwischvorrichtung (10) nach mindestens einem der vorhergehenden Ansprüche, **dadurch gekennzeichnet, dass** ein Klemmelement und der Halter (14) durch eine Bolzenverbindung, insbesondere Schraub- oder Nietverbindung, verbunden sind.

5. Scheibenwischvorrichtung (10) nach mindestens einem der vorhergehenden Ansprüche 3 oder 4, **dadurch gekennzeichnet, dass** der Halter (14) eine Öffnung (30) mit einer Berandung (31) aufweist, durch die Getriebekomponenten (22) des Getriebes durchtreten, und ein Schlitz (32) im Bereich der Berandung (31) vorgesehen ist, derart, dass eine Brücke gebildet ist.

## Claims

1. Windscreen wiper device (10), in particular for a motor vehicle, with a drive (16) which comprises a gearing housing (18) with a gearing, at least one holder (14) and at least one support (12) which is fastened to the at least one holder (14), wherein a clamping connection is provided between the support (12) and the holder (14), **characterized in that** the holder (14) comprises a holding region (26) and a flexible means (28), wherein the holding region (26) is formed so as to be stiff and integral with the flexible means (28), **in that** the holding region (26) of the holder (14) is fastened to the gearing housing (18), and **in that** the support (12) is clamped between the gearing housing (18) and the flexible means (28).

2. Windscreen wiper device (10) according to Claim 1, **characterized in that** the flexible means (28) is flexible in relation to the holding region (26).

3. Windscreen wiper device (10) according to Claim 1 or 2, **characterized in that** the flexible means (28) is designed as a bridge.

4. Windscreen wiper device (10) according to at least one of the preceding claims, **characterized in that** a clamping element and the holder (14) are connected by a bolted connection, in particular screw connection or riveted connection.

5. Windscreen wiper device (10) according to at least either of the preceding Claims 3 and 4, **characterized in that** the holder (14) has an opening (30) with a boundary (31), through which gearing components (22) of the gearing pass, and a slot (32) is provided in the region of the boundary (31) in such a manner that a bridge is formed.

## Revendications

1. Dispositif d'essuie-glace (10), notamment pour un véhicule automobile, comprenant un entraînement (16) qui comporte un boîtier de transmission (18) pourvu d'une transmission, au moins un dispositif de retenue (14) et au moins un support (12) qui est fixé à l'au moins un dispositif de retenue (14), une liaison par serrage étant prévue entre le support (12) et le dispositif de retenue (14), **caractérisé en ce que** le dispositif de retenue (14) comprend une région de retenue (26) et un moyen flexible (28), la région de retenue (26) étant réalisée de manière rigide et de manière à faire corps avec le moyen flexible (28), **en ce que** la région de retenue (26) du dispositif de retenue (14) est fixée au boîtier de transmission (18) et **en ce que** le support (12) est serré entre le boîtier de transmission (18) et le moyen flexible (28).

2. Dispositif d'essuie-glace (10) selon la revendication 1, **caractérisé en ce que** le moyen flexible (28) est flexible par rapport à la région de retenue (26).

3. Dispositif d'essuie-glace (10) selon la revendication 1 ou 2, **caractérisé en ce que** le moyen flexible (28) est réalisé sous forme de pont.

4. Dispositif d'essuie-glace (10) selon au moins l'une quelconque des revendications précédentes, **caractérisé en ce qu'**un élément de serrage et le dispositif de retenue (14) sont reliés au moyen d'une liaison par boulonnage, notamment d'une liaison par vissage ou par rivetage.

5. Dispositif d'essuie-glace (10) selon au moins l'une quelconque des revendications précédentes 3 et 4, **caractérisé en ce que** le dispositif de retenue (14) comprend une ouverture (30) pourvue d'un bord (31), à travers laquelle passent les composants de transmission (22) de la transmission, et une fente (32) est prévue dans la région du bord (31), de telle sorte qu'un pont soit formé.
